# EUROPEAN PATENT APPLICATION

(11) **EP 2 869 544 A1**
(43) Date of publication of application: **06.05.2015**
(21) Application number: 13836389.0
(22) Date of filing: 27.08.2013
(51) Int. Cl.: H04M 3/50

(54) **CALL PROCESSING METHOD AND DEVICE**

(30) Priority: 13.09.2012 CN 201210338424
(71) Applicant: ZTE Corporation, Shenzhen, Guangdong 518057 (CN)
(72) Inventor: LIU, Bo, Shenzhen Guangdong 518057 (CN)
(74) Representative: Lambert, Ian Robert
(86) International application number: PCT/CN2013/082388
(87) International publication number: WO 2014/040495

(57) **Abstract**

A call processing method and device are provided, wherein the call processing method includes that a call centre server receives a connection request from a designated terminal, wherein the designated terminal is a fixed terminal or mobile terminal which is capable of accessing to the call centre server; the call centre server determines the user authority of the designated terminal; the call centre server sends customer data corresponding to the designated terminal to the designated terminal according to the user authority of the designated terminal which has established the connection. Thus the method and device enable a user to call a customer whenever and wherever possible, but also strengthen the protection of the target customer data.

## Description

### TECHNICAL FIELD

The disclosure relates to communication technology, in particular to a call processing method and device.

### BACKGROUND

With the intense competition in industries, the communication and relationship with customers have become more and more important, a flexible and powerful customer service call-out system thus appears to be especially important. Traditional systems generally perform various inquiries, return visits and marketing activities by a timed automatic call-out manner or a manual dialling manner. Both of the two ways are generally limited in time and space, having a certain limitation and thus failing to provide targeted customized services for important customers, big customers whenever and wherever possible.

One solution is that a user manages the calling tasks and customer data by means of a terminal. However, in this case, the change of a user, for example, the user transfers to another job or quits the previous job, will lead to a discontinuity in service, and even the risk of losing important customer data. Until now, there has not yet a solution available for maintaining a proper balance among the continuity in service, user experience, and protection of important customer data.

### SUMMARY

To this end, the embodiments of the disclosure provide a call process method and device, which enable a user to call target customers whenever and wherever possible, and strengthen the protection of target customer data.

To achieve the object described above, the technical solution in the embodiments of the disclosure is implemented as follows.

An embodiment of the disclosure provides a call processing method, which includes:
a call centre server receives a connection request from a designated terminal, wherein the designated terminal is a fixed terminal or a mobile terminal which is capable of accessing to the call centre server;
the call centre server determines the user authority of the designated terminal;
the call centre server sends customer data corresponding to the designated terminal to the designated terminal according to the user authority of the designated terminal which has established the connection.

Preferably, the method further may include that the call centre server performs a call management on a customer according to an instruction from the designated terminal which has established the connection.

Preferably, the step of the call centre server receiving a connection request from a designated terminal may include that:
the call centre server receives the connection request which is sent by the designated terminal by dialling; or
receiving, by the call centre server, the connection request which is sent by the designated terminal via a computer network ; or
receiving, by the call centre server, the connection request which is sent by the designated terminal via a local interface of the call centre server.

Preferably, the step of the call centre server determining the user authority of the designated terminal may include that:
the call centre server verifies the number of the designated terminal and determines the user authority of the designated terminal; or
the call centre server verifies the account information which is sent by the designated terminal and determines the user authority of the designated terminal.

Preferably, the step of the call centre server sending, customer data corresponding to the designated terminal to the designated terminal according to the user authority of the designated terminal with which the call centre server has established the connection, may include that:
the call centre server sends, to the designated terminal, a task list of the customer data corresponding to the designated terminal according to the user authority of the designated terminal which has established the connection.

Preferably, the call management may include:
initiation of a call task, termination of a call task, modification of call time and modification of call strategy.

An embodiment of the invention further provides a call centre server, which includes:
a connection unit, configured to receive a connection request from a designated terminal, wherein the designated terminal is a fixed terminal or a mobile terminal which is capable of accessing to the call centre server;
an authority determination unit, configured to determine the user authority of the designated terminal;
a data sending unit, configured to send, customer data corresponding to the designated terminal to the designated terminal according to the user authority of the designated terminal which has established the connection.

Preferably, the call centre server further may include:
a call-out unit, configured to perform a call management on a customer according to an instruction from the designated terminal which has established the connection.

Preferably, the connection unit may be configured to:
receive the connection request which is sent by the designated terminal by dialling; or
receive the connection request which is sent by the designated terminal via a computer network; or
receive the connection request which is sent by the designated terminal via a local interface of the call centre server.

Preferably, the authority determination unit may be configured to:
verify the number of the designated terminal and determines the user authority of the designated terminal; or
verify the account information which is sent by the designated terminal and determines the user authority of the designated terminal.

The call processing method and device provided in the embodiments of the disclosure receive a connection request from a designated terminal by a call centre server, wherein the designated terminal is a fixed terminal or a mobile terminal which is capable of accessing to the call centre server; the call centre server determines the user authority of the designated terminal; the call centre server sends, to the designated terminal, customer data corresponding to the designated terminal according to the user authority of the designated terminal which has established the connection. In this way, the method and device not only enable a user to call a customer whenever and wherever possible, but also strengthen the protection of target customer data.

### BRIEF DESCRIPTION OF THE DRAWINGS

Fig. 1 is a flow chart of a call processing method according to a first embodiment of the present disclosure;
Fig. 2 is a flow chart of a call processing method according to a second embodiment of the present disclosure; and
Fig. 3 is a schematic view of the composition and structure of a call centre server according to the first embodiment of the present disclosure.

### DETAILED DESCRIPTION

The embodiments of the disclosure provide a call process method and device, so that a user can call target customers whenever and wherever possible and strengthen the protection of target customer data.

The embodiments of the disclosure will be further illustrated below in detail in combination with accompanied drawings and specific embodiments.

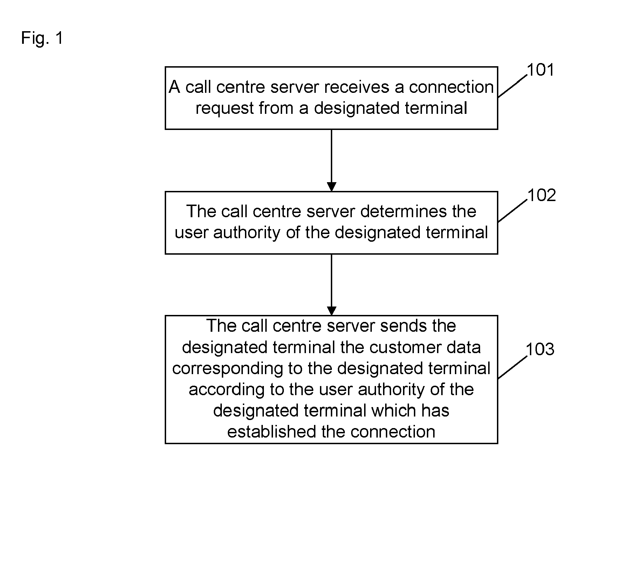

Fig. 1 is a flow chart of a call processing method according to a first embodiment of the disclosure. As shown in Fig. 1, the call processing method provided in the embodiment of the disclosure includes the following steps.

Step 101 is that a call centre server receives a connection request from a designated terminal; where the designated terminal is a fixed terminal or mobile terminal which is capable of accessing to the call centre server.

Preferably, the step of a call centre server receiving a connection request from a designated terminal may include that:
the call centre server receives the connection request which is sent by the designated terminal by dialling; or
the call centre server receives the connection request which is sent by the designated terminal via a computer network ; or
the call centre server receives the connection request which is sent by the designated terminal via a local interface of the call centre server.

Step 102 is that the call centre server determines the user authority of the designated terminal.

Preferably, step of the call centre server determining the user authority of the designated terminal may include that:
the call centre server verifies the number of the designated terminal and determines the user authority of the designated terminal; or
the call centre server verifies the account information which is sent by the designated terminal and determines the user authority of the designated terminal.

Step 103 is that the call centre server sends, customer data corresponding to the designated terminal to the designated terminal according to the user authority of the designated terminal which has established the connection.

Preferably, the call centre server performs the call management on a customer according to an instruction from the designated terminal which has established the connection.

Preferably, the step of the call centre server sending, customer data corresponding to the designated terminal to the designated terminal according to the user authority of the designated terminal which has established the connection may include that:
the call centre server sends, to the designated terminal, a task list including the customer data corresponding to the designated terminal according to the user authority of the designated terminal which has established the connection.

Preferably, the call management may include:
initiation of a call task, termination of a call task, modification of a call time, and modification of a call strategy.

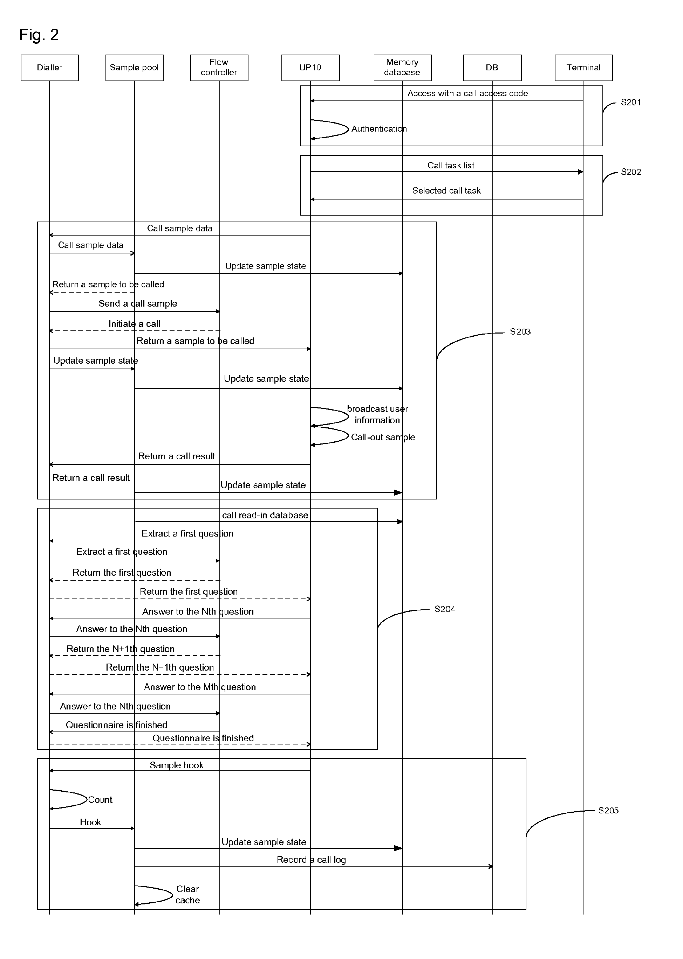

Fig. 2 is a flow chart of a call processing method according to a second embodiment of the disclosure. In the second embodiment, the designated terminal is a mobile terminal and specifically a cell phone. As shown in Fig. 2, the call processing method according to the second embodiment of the disclosure includes the following steps.

Step 201 includes a call from a cell phone and authentication, which include that a terminal accesses with a call access code to a call-out system control centre UP10; UP10 authenticates the accessed terminal and the terminal accesses to said UP10 when it passes the authentication.

Here, a user may access with a call access code to the call-out system control centre UP10 by virtue of a cell phone;
after the cell phone accesses to UP10, the UP10 authenticates the cell phone according to the Subscriber Identity Module (SIM) of the cell phone; the cell phone accesses to said UP10 when it passes the authentication.

Step 202 includes that call task acquisition and operation, which include that the UP10 broadcasts to the terminal the call task list to which the terminal has the access authority; after the terminal acquires the call task list, the terminal may select a task which requires a call and then set a call parameter and make a call, and returns to the UP10 the call task which has been selected by the terminal;
the call task here may include initiating a call to a certain customer terminal; setting a call parameter may include setting the SIM card number of the customer terminal.

Step 203 includes an automatic call process, which includes the following steps:
UP10 sends a call task indication to a dialler;
after the dialler receives the call task indication which is sent by the UP10, the dialler requests to acquire and receives call sample data from the UP10;
after the dialler receives the call sample data which is sent by the UP10, the dialler sends the call sample data to a sample pool and sends a state update message to a memory database sample via the sample pool; further, the sample pool sends a call sample to the dialler;
after the dialler receives the call sample which is sent by the sample pool, the dialler sends the call sample to a flow controller and receives a response message which is returned by the flow controller, the flow controller then turns on the monitoring on the service which is realized by the call example;
the dialler initiates a call to feed back a call sample to the UP10;
the dialler sends a sample state update message via the sample pool to the memory database, and the memory data is then updated;
the UP10 broadcasts user information and the call sample and returns a call result to the dialler; and
the dialler sends the returned call result via the sample pool to the memory database to update the memory database.

Step 204 includes a call monitoring process, which includes that:
the sample pool writes the call content into the memory database; and
the flow controller controls and extracts the content of the conversation between the terminal and the customer terminal, and sends the content to the UP10 for the management by the user; for example, UP10 sends the dialler an message for extracting a first question; the dialler sends the flow controller the message about the extracted first question and receives a response message about the first question which is returned by the flow controller; the dialler returns the response message about the first question to the UP10; the UP10 sends the dialler an answer to the Nth question, and continues the aforesaid process until the questionnaire is finished.

Step 205 includes a call termination process, which includes:
the UP10 sends a sample hook message to the dialler to interrupt the connection between the dialler terminal and the customer terminal;
the dialler counts the conversation data; the dialler sends a hook message to the sample pool to terminate the connection with the corresponding sample;
the sample pool sends an update sample state message to the memory database, so as to update the corresponding sample state of the memory database to a hook state; and
the sample pool sends call data information of the terminal and the customer terminal to a DB to record a call log, and clear its own cache after the call data information is sent.

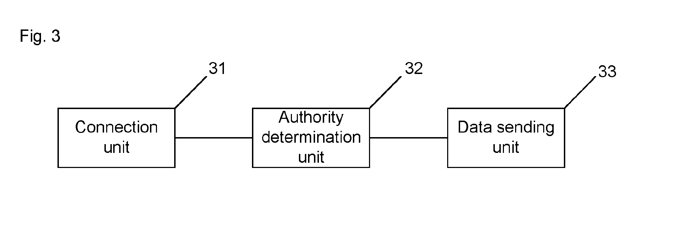

Based on the method described above, Fig. 3 is a schematic view of the composition and structure of a call centre server according to the first embodiment of the disclosure. As shown in Fig. 3, the call centre server according to the first embodiment of the disclosure includes:
a connection unit 31, configured to receive a connection request from a designated terminal; where the designated terminal is a fixed terminal or mobile terminal which is capable of accessing to the call centre server;
an authority determination unit 32, configured to determine the user authority of the designated terminal;
a data sending unit 33, configured to send, customer data corresponding to the designated terminal to the designated terminal according to the user authority of the designated terminal which has established the connection.

Preferably, the call centre server further may include:
a call-out unit, configured to perform the call management on a customer according to an instruction from the designated terminal which has established the connection.

Preferably, the connection unit 31 may be configured to:
receive the connection request which is sent by the designated terminal by dialling; or
receive the connection request which is sent by the designated terminal via a computer network; or
receive the connection request which is sent by the designated terminal via a local interface of the call centre server.

Preferably, the authority determination unit 32 may be configured to:
verify the number of the designated terminal and determines the user authority of the designated terminal; or
verify the account information which is sent by the designated terminal and determines the user authority of the designated terminal.

Both of the authority determination unit 32 and the call-out unit of the call centre server may be implemented as a Central Processing Unit (CPU), a Digital Signal Processor (DSP) or a Field-Programmable Gate Array (FPGA) in the server in practical applications. The connection unit 31 and the data sending unit 33 in the call centre server may be implemented as a transceiver or duplexer in practical applications.

In conclusion, the embodiments of the disclosure provide a call process method and device, for enabling a user to call target customers whenever and wherever possible and strengthening the protection of target customer data.

Those skilled in the art should understand that the embodiments of the disclosure may be provided in the form of method, system or computer programme product. Therefore, the disclosure may adopt, such as, a complete hardware embodiment, a complete software embodiment or a combination of software and hardware embodiments. Moreover, the disclosure may be shown as a computer programme product which is implemented on one or more computer-usable memory medium (including but not limited to a disk memory and an optical memory, etc.) including computer-usable programme codes.

The disclosure is described according to the flow charts and/or block diagrams of the method, device (system) and computer programme product of the embodiments of the disclosure. It should be understood that each process and/or block in the flow charts and/or block diagrams, and a combination of processes and blocks in the flow charts and/or block diagrams can be implemented using computer programme instructions. These computer programme instructions can be provided to a general purpose computer, a special purpose computer, an embedded processor and a processor of other programmable data processing equipments to generate a machine, so as to generate a device which implements functions designated in one or more processes of a flow chart and/or in one or more blocks of a block diagram by a computer or a processor of other programmable data processing equipment.

These computer programme instructions also can be stored in a computer-readable memory which is able to guide the computer or other programmable data processing equipments to operate in a specific manner, which makes the instructions stored in the computer-readable memory to generate a manufacture including an instruction device, and the instruction device implements the functions designated in one or more processes of the flow chart and/or in one or more blocks of the block diagram.

These computer programme instructions also can be loaded into a computer or other programmable data processing equipments, which makes a series of operating steps to be executed on the computer or the other programmable equipments in order to perform the processing implemented by the computer, such that the instructions which are executed on the computer or the other programmable equipments are provided for implementing the steps of the functions that are designated in one or more processes of the flow chart and/or in one or more blocks of the block diagram.

Obviously, modifications and variations may be made to the disclosure by the skilled in the art without going beyond the spirit and the scope of the disclosure. In this way, if these modifications and variations to the disclosure are not beyond the scope of the claims and their equivalent technology, the disclosure is intended to include these modifications and variations.

### INDUSTRIAL APPLICATION

The embodiments of the disclosure, which determine the user authority of a designated terminal by receiving a connection request from the designated terminal by a call centre server and send the designated terminal the customer data corresponding to the designated terminal according to the user authority of the designated terminal with which the call centre server has established the connection, not only enable a user to call a customer whenever and wherever possible, but also strengthen the protection of target customer data.

## Claims

1. A call processing method, comprising:
receiving, by a call centre server, a connection request from a designated terminal, wherein the designated terminal is a fixed terminal or a mobile terminal which is capable of accessing to the call centre server;
determining, by the call centre server, a user authority of the designated terminal;
sending, by the call centre server, customer data corresponding to the designated terminal to the designated terminal according to the user authority of the designated terminal which has established the connection.

2. The call processing method according to claim 1, further comprising:
performing, by the call centre server, a call management on a customer according to an instruction from the designated terminal which has established the connection.

3. The call processing method according to claim 1, wherein the receiving, by a call centre server, a connection request from a designated terminal comprises:
receiving, by the call centre server, the connection request which is sent by the designated terminal by dialling; or
receiving, by the call centre server, the connection request which is sent by the designated terminal via a computer network ; or
receiving, by the call centre server, the connection request which is sent by the designated terminal via a local interface of the call centre server.

4. The call processing method according to claim 3, wherein the determining, by the call centre server, a user authority of the designated terminal comprises:
verifying, by the call centre server, a number of the designated terminal and determining the user authority of the designated terminal; or
verifying, by the call centre server, account information which is sent by the designated terminal and determining the user authority of the designated terminal.

5. The call processing method according to claim 1, wherein the sending, by the call centre server, customer data corresponding to the designated terminal to the designated terminal according to the user authority of the designated terminal which has established the connection comprises:
sending, by the call centre server, to the designated terminal, a task list comprising the customer data corresponding to the designated terminal according to the user authority of the designated terminal which has established the connection.

6. The call processing method according to claim 2, wherein the call management comprises:
initiation of a call task, termination of a call task, modification of a call time, and modification of a call strategy.

7. A call centre server, comprising:
a connection unit, configured to receive a connection request from a designated terminal, wherein the designated terminal is a fixed terminal or a mobile terminal which is capable of accessing to the call centre server;
an authority determination unit, configured to determine a user authority of the designated terminal; and
a data sending unit, configured to send customer data corresponding to the designated terminal to the designated terminal according to the user authority of the designated terminal which has established the connection.

8. The call centre server according to claim 7, wherein the call centre server further comprises:
a call-out unit, configured to perform a call management on a customer according to an instruction from the designated terminal which has established the connection.

9. The call centre server according to claim 7, wherein the connection unit is configured to:
receive the connection request which is sent by the designated terminal by dialling; or
receive the connection request which is sent by the designated terminal via a computer network; or
receive the connection request which is sent by the designated terminal via a local interface of the call centre server.

10. The call centre server according to claim 8, wherein the authority determination unit is configured to:
verify a number of the designated terminal and determines the user authority of the designated terminal; or
verify account information which is sent by the designated terminal and determines the user authority of the designated terminal.
